Europäisches Patentamt

European Patent Office

Office européen des brevets

(19)

(11) Publication number:

# 0 182 490
B1

(12) **EUROPEAN PATENT SPECIFICATION**

(45) Date of publication of patent specification: 07.09.88

(51) Int. Cl.⁴: **G 04 C 3/14,** H 02 P 8/00

(21) Application number: 85307295.7

(22) Date of filing: 11.10.85

(54) **Improvements in or relating to stepping motor driven electronic timepieces.**

(30) Priority: 16.10.84 JP 216581/84

(43) Date of publication of application:
28.05.86 Bulletin 86/22

(45) Publication of the grant of the patent:
07.09.88 Bulletin 88/36

(84) Designated Contracting States:
CH DE FR GB LI

(56) References cited:
EP-A-0 062 273
EP-A-0 097 350

(73) Proprietor: **SEIKO INSTRUMENTS INC.**
**31-1, Kameido 6-chome Koto-ku**
**Tokyo 136 (JP)**

(72) Inventor: **Inoue, Yuichi c/o Seiko Instruments**
**and Electronics Ltd. 6-31-1, Kameido Koto-ku**
**Tokyo (JP)**

(74) Representative: **Miller, Joseph et al**
**J. MILLER & CO. Lincoln House 296-302 High**
**Holborn**
**London WC1V 7JH (GB)**

Courier Press, Leamington Spa, England.

## Description

This invention relates to timepiece turn detecting circuits and, although it is not so restricted, it is more particularly concerned with the turn detector circuit usually provided in electronic wristwatches and other so-called electronic timepieces—that is to say with the means provided in such timepieces for detecting whether or not the stepping motor has responded correctly with a stepping turn when a driving pulse has been applied to its excitation coil.

In U.S. Specification No. 4,326,278 there is disclosed a method for driving a turn detector circuit for detecting whether or not a driving pulse applied to the coil of a timepiece stepping motor having a rotor and a stator causes said rotor to rotate correctly, said turn detection being effected by connecting a high impedance element electrically to said coil upon operation of first switching means and connecting a low impedance element electrically to said coil upon operation of second switching means alternately.

However, the voltage induced in the motor coil is not solely dependent upon whether or not the rotor turns correctly in response to a driving pulse but is affected by many other features. According, therefore, to the present invention there is provided a method for driving a turn detector circuit for detecting whether or not a driving pulse applied to the coil of a timepiece stepping motor having a rotor and a stator causes said rotor to rotate correctly, said turn detection being effected by connecting a high impedance element electrically to said coil upon operation of first switching means and connecting a low impedance element electrically to said coil upon operation of second switching means alternately, characterised by the steps of applying first signals to said first switching means, applying second signals to said second switching means and then applying third signals to said second switching means for disconnecting said low impedance element from said coil while said high impedance element is connected thereto at the time of turn detection.

Preferably, the said second and third signals are applied alternately to said second switching means.

Preferably, the said low impedance element and said high impedance element are respectively a low ohmic resistance element and a high ohmic resistance element.

The invention also comprises a timepiece stepping motor having a rotor, a stator, a coil, and a turn detector circuit for detecting whether a driving pulse applied to the coil causes said rotor to rotate correctly, said turn detection being effected by connecting a high impedance element of said circuit electrically to said coil upon operation of first switching means and connecting a low impedance element of said circuit electrically to said coil upon operation of second switching means alternately, characterised in that in operation the circuit applies first signals to said first switching means, second signals to said second switching means and then third signals to said second switching means for disconnecting said low impedance element from said coil while said high impedance element is connecte thereto at the time of turn detection.

The invention is illustrated, merely by way of example, in the accompanying drawings, in which:—

Figure 1 shows a stepping motor driving circuit and turn detecting circuit for the stepping motor of a wristwatch;

Figure 2 is a simplified schematic representation of a typical stepping motor as commonly used in a wristwatch;

Figure 3 is a timing chart showing how the circuit of Figure 1 is operated in accordance with the methods of present day known practice;

Figures 4A, 4B, 4C and 4D are diagrams which explain the change in VRS (voltage induced in the motor coil due to motion of its rotor) caused by the deviation of switching timing during a time T2 for turn detection;

Figure 5 is a timing chart showing how the circuit of Figure 1 is operated in accordance with the method of the present invention;

Figures 6A and 6B are diagrams showing, respectively, results experimentally obtained when using the known conventional driving method for the turn detector circuit and the results experimentally obtained when using the driving method of the present invention; and

Figure 7 is a block circuit diagram of an electronic timepiece including means for producing the timing chart waveforms shown in Figure 5.

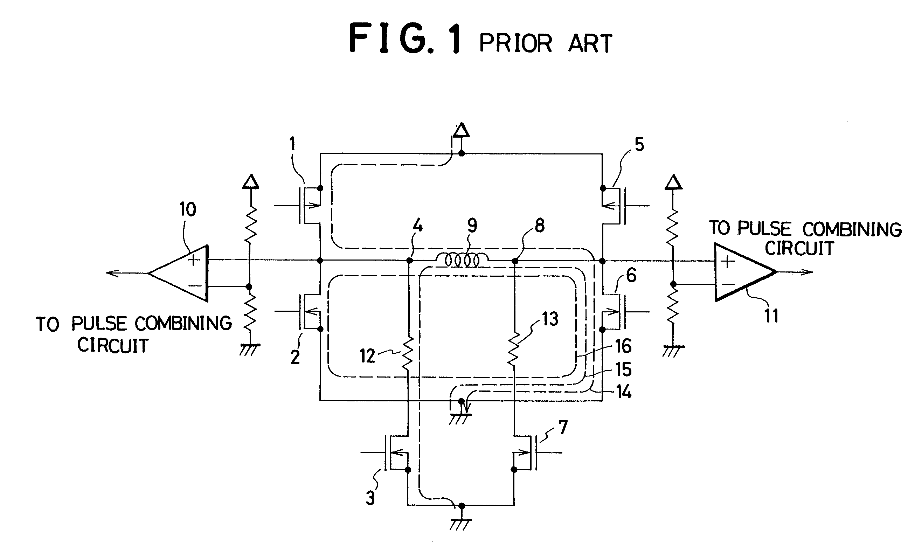

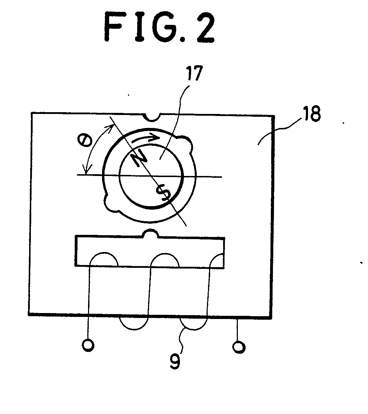

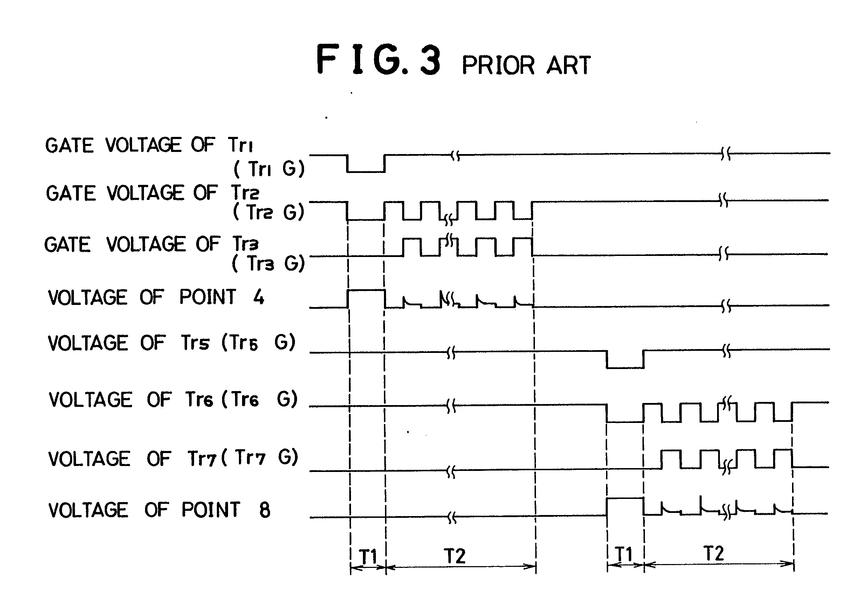

The circuit of Figure 1 is known per se as is the stepping motor of Figure 2, and the timing chart of Figure 3 shows the known method of operating the circuit of Figure 1. This known method will now be described. In this method when, at a time T1, a drive pulse is applied to an excitation coil 9 of the motor, a transistor device Tr1 (actually a p-type MOSFET) and a transistor device Tr6 (actually an n-type MOSFET) are rendered conductive, and an electric current flows from a power supply source (not shown) through a path indicated by a broken line 14. 12 and 13 are high impedance elements and may be high ohmic resistances. At a time T2 when turn detection is to be effected, Tr6 remains conductive but further MOSFETS Tr2 and Tr3 are rendered conductive and non-conductive alternately. Tr2 and Tr6, when conductive, constitute low impedance elements. As will now be seen, closed loops indicated by broken lines 15 and 16 are alternately established, and a voltage VRS is induced in the coil due to the motion of rotor 17. This voltage is represented in Figure 3 as the voltage appearing at point 4. If the rotor turns correctly in response to the driving pulse, the voltage VRS is usually about 2.0 volts (flowing into the source, not shown, of the power supply voltage VDD via a parasitic diode in an integrated circuit and is clamped to a forward voltage of VDD+ the drop in the parasitic diode), with VSS being set at 0 volts, but, if the rotor does not rotate correctly, VRS is usually between 0.3 and 1.2 volts. The difference between the two possible values of VRS (the higher value if the rotor turns correctly and the lower value if it does not) is detected by comparators 10 and 11, and in this way turn detection, i.e. detection of whether or not the rotor has turned correctly in response to a driving pulse, is effected.

The above known method for driving a turn detector circuit to detect whether a stepping motor rotor turns or not will be found exemplified in U.S. Patent No. 4,326,278 issued April 20, 1982 to Shida et al.

However, the voltage VRS is not solely dependent upon whether or not the rotor turns correctly in response to a driving pulse but is affected by many other features including the details of shape and material of the rotor 17 and the stator 18, the inductance and resistance of the motor coil 9, the resistances or impedances of the elements 12 and 13, the timing of the switching of Tr2 and Tr6, the stray capacitances at the ends 4 and 8 of the coil 9, and the switching timing T2. The variation of the voltage VRS due to such extraneous causes as the foregoing can cause erroneous turn detection to occur, the rotor often being detected as not turning when it actually is turning, or being detected as turning when in fact it is not. This is a serious defect causing increase in the consumption of electrical power by the watch or causing the watch to become slow.

The modern trend towards small, compact wristwatches and the consequent use of stepping motors with very small rotors, stators, and coils has made extraneously caused variations in VRS particularly prone to occur and, in very small compact timepieces, bad time-keeping (the watch becoming slow), caused by the turn detection circuit responding as though the rotor is turning when in fact it is not, can be seriously troublesome.

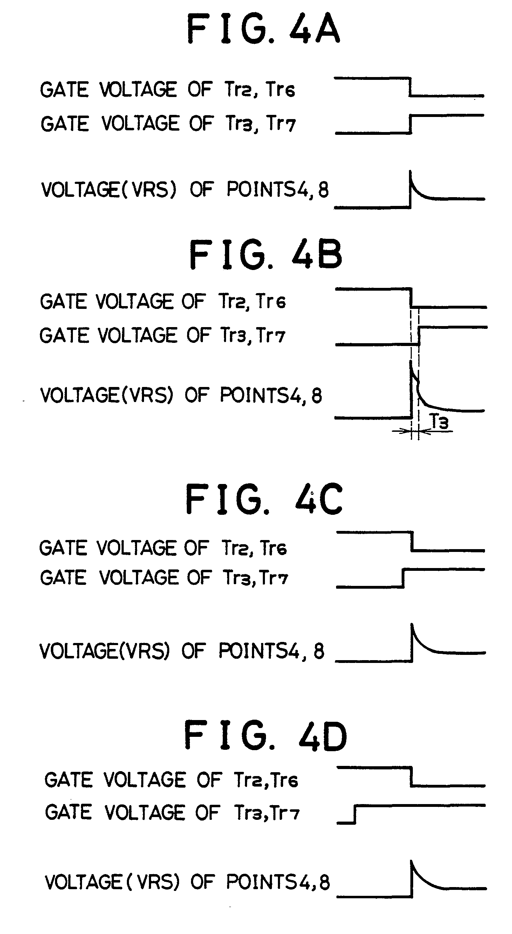

In the above described known method of driving the turn detection circuit, the switching timings of Tr2 and Tr3 and of Tr6 and Tr7 during the time T2 are so selected that Tr3 or Tr7 is rendered conductive just when Tr2 or Tr6 is rendered non-conductive (see Figure 4A). However, even though the switching timing is intended to be selected as just mentioned, small amounts of time delay occur due to wiring capacitance and gate capacitance in an integrated circuit. There are no problems if the signals applied to the gates of Tr2 and Tr3 are delayed by the same amount, or if the signal applied to Tr2 is delayed more than the signal applied to Tr3 (as shown in Figure 4C). However, a large value of voltage VRS will be induced if the signal applied to Tr3 is delayed more than the signal applied to Tr2 (as shown in Figure 4B), for at the time T3 of Figure 4B when both the Tr2 and Tr3 are rendered conductive, there is no closed loop formed, and a high voltage VRS is accordingly induced.

The present invention seeks to avoid the foregoing defects and to provide a method of driving a turn detection circuit which will obviate or at least greatly reduce the liability to erroneous turn detection. This object is achieved, in accordance with the present invention, by so operating the circuit that the timing at which Tr2 or Tr6 is rendered non-conductive is made to differ, logically, from the timing at which Tr3 or Tr7 is rendered conductive, so that Tr2 and Tr3 will not be simultaneously non-conductive and neither will Tr6 and Tr7.

In the case of the present invention, the method of driving the turn detector circuit includes the steps of applying a first signal to a first switching means (for connecting said high impedance element to said coil), applying a second signal to a second switching means (for connecting said low impedance element to said coil) and then applying a third signal to the second switching means for disconnecting the low impedance element from said coil.

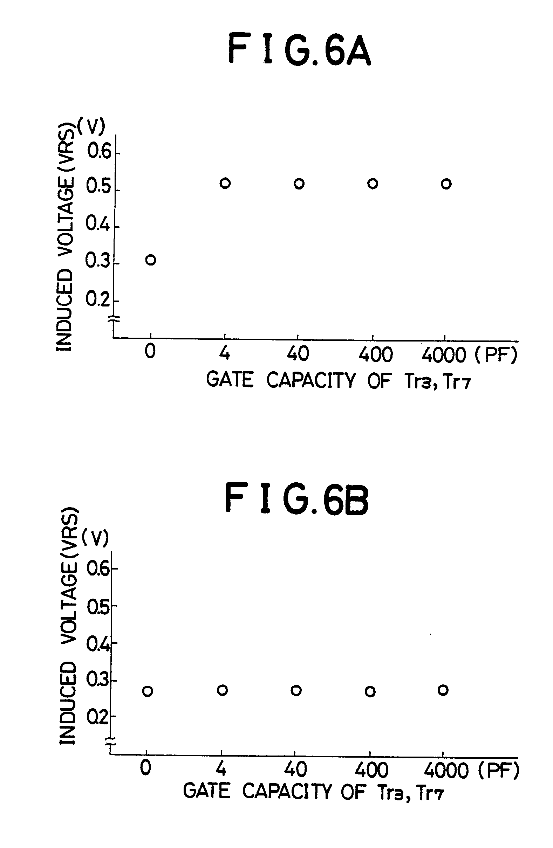

The improvement obtained by use of the method of the present invention in place of the conventional known method will be seen from Figures 6A and 6B which show results experimentally obtained when using the old method—as shown in Figure 6A—and the results obtained when using the method of the present invention—as shown in Figure 6B.

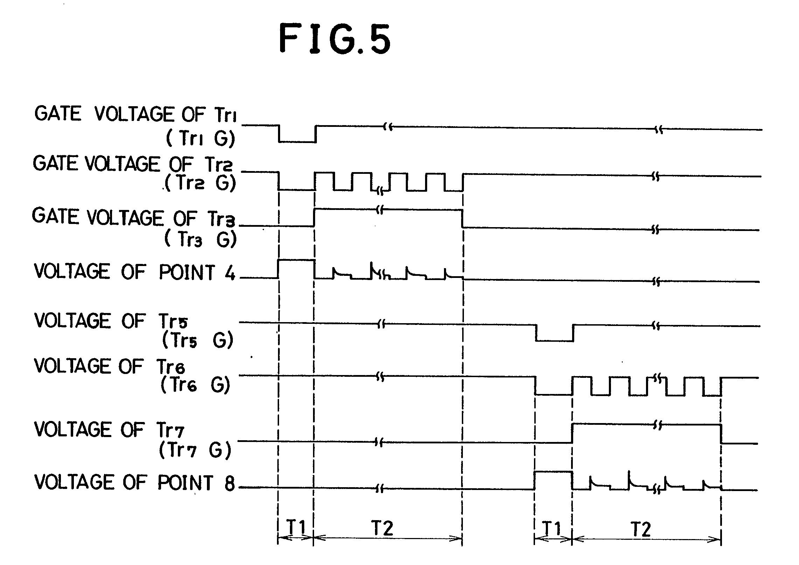

Figure 6A shows VRS in volts (V) as ordinates against the gate capacitance in piezo-farads (pF) of Tr3 or Tr7 when the known method hereinbefore described is used, i.e. with the conventional logic in which Tr2 and Tr3 or Tr6 and Tr7 are alternately rendered conductive and non-conductive as in Figure 3. As will be seen from Figure 6A the voltage VRS suddenly increases at a point where, as a result of increase in the gate capacitance of Tr3 or Tr7 a certain amount of increased delay occurs. Compare Figure 6A with Figure 6B which similarly shows the voltage VRS when the gate capacitance of Tr3 or Tr7 is increased when using the method of this invention, i.e. with the logic in which Tr3 or Tr7 is maintained conductive throughout the time T2 for switching Tr2 or Tr6 as shown in Figure 5. As will be seen from Figure 6B the value of the voltage VRS remains sensibly constant over the whole range of plotted gate capacitance of Tr3 or Tr7.

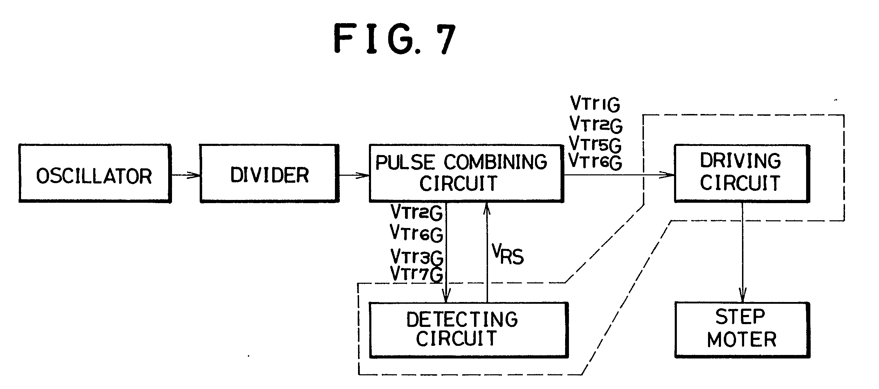

Figure 7 is a block circuit diagram of an electronic timepiece for producing the time chart waveforms shown in Figure 5.

Referring to Figure 7, a pulse combining circuit PCC provides the gate voltage $V_{Tr1G}$ for Tr1, the gate voltage $V_{Tr2G}$ for Tr2, the gate voltage $V_{Tr5G}$ for Tr5 and the gate voltage $V_{Tr6G}$ for Tr6 during the time T1 and provides the gate voltage $V_{Tr1G}$ for Tr1, the gate voltage $V_{Tr2G}$ for Tr2, the gate voltage $V_{Tr3}$ for Tr3, the gate voltage $V_{Tr5}$ for Tr5, the gate voltage $V_{Tr6}$ for Tr6 and the gate voltage $V_{Tr7}$ for Tr7 during the time T2. The detecting and driving circuit itself is as in Figure 1 but, as will now be appreciated it is operated in accordance with the method of this invention which is quite different from the known conventional method. The oscillator is the usual time base oscillator of an electronic wristwatch and feeds into the usual divider.

The great advantage of the method of the present invention is that, because the voltage VRS remains stable, the liability to erroneous turn detection is greatly reduced. Delays due to wiring capacitance or gate capacitance do not cause erroneous detection through timing delays. This is a great advantage from the standpoint of the designer and manufacturer producing integrated circuits embodying watch circuitry for if the method of the present invention is employed, the designer of an integrated circuit in which the circuit of Figure 1 is incorporated does not have to pay close attention to the gate capacitances of Tr2, Tr6, Tr3 or Tr7 or to delays introduced by elements leading up to the gates of these devices and, hence, there is no need to control or check such items during manufacturing the integrated circuits.

## Claims

1. A method for driving a turn detector circuit for detecting whether or not a driving pulse applied to the coil (9) of a timepiece stepping motor having a rotor (17) and a stator (18) causes said rotor to rotate correctly, said turn detection being effected by connecting a high impedance element (12, 13) electrically to said coil (9) upon operation of first switching means (Tr3, Tr7) and connecting a low impedance element (Tr2, Tr6) electrically to said coil upon operation of second switching means (Tr2, Tr6) alternately, characterised by the steps of applying first signals ($V_{Tr3G}$, $T_{Tr7G}$) to said first switching means (Tr3, Tr7), applying second signals ($V_{Tr2G}$, $V_{Tr6G}$) to said second switching means (Tr2, Tr6) and then applying third signals ($V_{Tr2G}$, $V_{Tr6G}$) to said second switching means (Tr2, Tr6) for disconnecting said low impedance element (Tr2, Tr6) from said coil (9) while said high impedance element (12, 13) is connected thereto at the time of turn detection.

2. A method as claimed in claim 1, characterised in that said second and third signals ($V_{Tr2G}$, $V_{Tr6G}$) are applied alternately to said second switching means (Tr2, Tr6).

3. A method as claimed in claim 1 or 2, characterised in that said low impedance element (Tr2, Tr6) and said high impedance element (12, 13) are respectively a low ohmic resistance element and a high ohmic resistance element.

4. A timepiece stepping motor having a rotor (17), a stator (18) a coil (9), and a turn detector circuit (12, 13, Tr2, Tr3, Tr6, Tr7) for detecting whether a driving pulse applied to the coil (9) causes said rotor to rotate correctly, said turn detection being effected by connecting a high impedance element (12, 13) of said circuit electrically to said coil (9) upon operation of first switching means (Tr3, Tr7) and connecting a low impedance element (Tr2, Tr6) of said circuit electrically to said coil upon operation of second switching means (Tr2, Tr6) alternately, characterised in that operation the circuit applies first signals ($V_{Tr3G}$, $V_{Tr7G}$) to said first switching means (Tr3, Tr7), second signals ($V_{Tr2G}$, $V_{Tr6G}$) to said second switching means (Tr2, Tr6) and then third signals ($V_{Tr2G}$, $V_{Tr6G}$) to said second switching means (Tr2, Tr6) for disconnecting said low impedance element (Tr2, Tr6) from said coil (9) while said high impedance element (12, 13) is connected thereto at the time of turn detection.

5. A motor as claimed in claim 4, characterised in that said second and third signals ($V_{Tr2G}$, $V_{Tr6G}$) are applied alternately to said second switching means (Tr2, Tr6).

6. A motor as claimed in claim 4 or 5, characterised in that said low impedance element (Tr2, Tr6) and said high impedance element (12, 13) are respectively a low ohmic resistance element and a high ohmic resistance element.

## Patentansprüche

1. Verfahren zur Ansteuerung einer Drehdetektor-Schaltungsanordnung zur Detektierung, ob ein Treiberimpuls, der in die Wicklung (9) eines einen Rotor (17) und einen Stator (18) aufweisenden Zeitgeber-Schrittschaltmotors eingespeist wird, bewirkt, daß der Rotor richtig rotiert, wobei die Drehdetektierung dadurch erfolgt, daß ein Element (12, 13) hoher Impedanz bei Betätigung einer ersten Schaltereinrichtung (Tr3, Tr7) elektrisch an die Wicklung (9) und ein Element (Tr2, Tr6) kleiner Impedanz bei Betätigung einer zweiten Schaltereinrichtung (Tr2, Tr6) elektrisch an die Wicklung angeschaltet wird, dadurch gekennzeichnet, daß erste Signale ($V_{Tr3G}$, $V_{Tr7G}$) in die erste Schaltereinrichtung (Tr3, Tr7), zweite Signale ($V_{Tr2G}$, $V_{Tr6G}$) in die zweite Shaltereinrichtung (Tr2, Tr6) und sodann dritte Signale ($V_{Tr2G}$, $V_{Tr6G}$) in die zweite Schaltereinrichtung (Tr2, Tr6) eingespeist werden, um das Element (Tr2, Tr6) kleiner Impedanz von der Wicklung (9) abzuschalten, während das Element (12, 13) hoher Impedanz im Zeitpunkt der Drehdetektierung mit der Wicklung verbunden wird.

2. Verfahren nach Anspruch 1, dadurch gekennzeichnet, daß das zweite und dritte Signal ($V_{Tr2G}$, $V_{Tr6G}$) abwechselnd in die zweite Schaltereinrichtung (Tr2, Tr6) eingespeist werden.

3. Verfahren nach Anspruch 1 oder 2, dadurch gekennzeichnet, daß das Element (Tr2, Tr6) kleiner Impedanz und das Element (12, 13) hoher Impedanz ein Ohm'sches Element kleinen Widerstandswertes bzw. ein Ohm'sches Element hohen Widerstandswertes sind.

4. Zeitgeber-Schrittschaltmotor mit einem Rotor (17), einem Stator (18) und einer Wicklung (9) sowie mit einer Drehdetektor-Schaltungsanordnung (12, 13, Tr2, Tr3, Tr6, Tr7) zur Detektierung, ob ein in die Wicklung (9) eingespeister Treiberimpuls eine richtige Drehung des Rotors bewirkt, wobei die Drehdetektierung dadurch bewirkt wird, daß bei Betätigung einer ersten Schaltereinrichtung (Tr3, Tr7) ein Element (12, 13) hoher Impedanz der Schaltungsanordnung elektrisch mit der Wicklung (9) und bei Betätigung einer zweiten Schaltereinrichtung (Tr2, Tr6) ein Element (Tr2, Tr6) kleiner Impedanz mit der Wicklung verbunden wird, dadurch gekennzeichnet, daß die Schaltungsanordnung erste Signale ($V_{Tr3G}$, $V_{Tr7G}$) in die erste Schaltereinrichtung (Tr3, Tr7), zweite Signale ($V_{Tr2G}$, $V_{Tr6G}$) in die zweite Schaltereinrichtung (Tr2, Tr6) und sodann dritte Signale ($V_{Tr2G}$, $V_{Tr6G}$) in die zweite Schaltereinrichtung (Tr2, Tr6) einspeist, um das Element (Tr2, Tr6) kleiner Impedanz von der Wicklung (9) abzuschalten, während das Element (12, 13) hoher Impedanz im Zeitpunkt der Drehdetektierung mit der Wicklung verbunden wird.

5. Motor nach Anspruch 4, dadurch gekennzeichnet, daß das zweite und dritte Signal ($V_{Tr2G}$, $V_{Tr6G}$) abwechselnd in die zweite Schaltereinrichtung (Tr2, Tr6) eingespeist werden.

6. Motor nach Anspruch 4 oder 5, dadurch gekennzeichnet, daß das Element (Tr2, Tr6) kleiner Impedanz und das Element (12, 13) hoher Impedanz ein niederohmiges Widerstandselement bzw. ein hochohmiges Widerstandselement sind.

**Revendications**

1. Procédé de commande d'un circuit détecteur de rotation destiné à détecter si une impulsion de commande appliquée au bobinage (9) d'un moteur pas à pas de chronomètre ayant un rotor (17) et un stator (18) provoque une rotation convenable du rotor ou non, la détection de la rotation étant réalisée par connexion électrique d'un élément d'impédance élevée (12, 13) au bobinage (9) lors du fonctionnement d'un premier dispositif de commutation (Tr3, Tr7) et la connexion électrique d'un élément de faible impédance (Tr2, Tr6) au bobinage lors du fonctionnement d'un second dispositif de commutation (Tr2, Tr6), en alternance, caractérisé par les étapes d'application de premiers signaux ($V_{Tr3G}$, $V_{Tr7G}$) au premier dispositif de commutation (Tr3, Tr7), d'application de seconds signaux ($V_{Tr2G}$, $V_{Tr6G}$) au second dispositif de commutation (Tr2, Tr6), puis d'application de troisièmes signaux ($V_{Tr2G}$, $V_{Tr6G}$) au second dispositif de commutation (Tr2, Tr6) afin que l'élément de faible impédance (Tr2, Tr6) soit déconnecté du bobinage (9) alors que l'élément d'impédance élevée (12, 13) est connecté au bobinage au moment de la détection de la rotation.

2. Procédé selon la revendication 1, caractérisé en ce que les seconds et les troisièmes signaux ($V_{Tr2G}$, $V_{Tr6G}$) sont appliqués en alternance au second dispositif de commutation (Tr2, Tr6).

3. Procédé selon l'une des revendications 1 et 2, caractérisé en ce que l'élément de faible impédance (Tr2, Tr6) et l'élément d'impédance élevée (12, 13) sont respectivement un élément de faible résistance ohmique et un élément de résistance ohmique élevée.

4. Moteur pas à pas pour chronomètre ayant un rotor (17), un stator (18), un bobinage (9) et un circuit détecteur de rotation (12, 13, Tr2, Tr3, Tr6, Tr7) destiné à détecter si une impulsion de commande appliquée au bobinage (9) provoque la rotation convenable du rotor ou non, la détection de la rotation étant réalisée par connexion électrique d'un élément d'impédance élevée (12, 13) du circuit au bobinage (9) lors du fonctionnement du premier dispositif de commutation (Tr3, Tr7) et la connexion électrique d'un élément de faible impédance (Tr2, Tr6) du circuit au bobinage lors du fonctionnement du second dispositif de commutation (Tr2, Tr6), en alternance, caractérisé en ce que le fonctionnement du circuit assure l'application de premiers signaux ($V_{Tr3G}$, $V_{Tr7G}$) au premier dispositif de commutation (Tr3, Tr7), de seconds signaux ($V_{Tr2G}$, $V_{Tr6G}$) au second dispositif de commutation (Tr2, Tr6) puis de troisièmes signaux ($V_{Tr2G}$, $V_{Tr6G}$) au second dispositif de commutation (Tr2, Tr6) afin que l'élément de faible impédance (Tr2, Tr6) soit déconnecté du bobinage (9) alors que l'élément d'impédance élevée (12, 13) est connecté à celui-ci au moment de la détection de la rotation.

5. Moteur selon la revendication 4, caractérisé en ce que les seconds et les troisièmes signaux ($V_{Tr2G}$, $V_{Tr6G}$) sont appliqués en alternance au second dispositif de commutation (Tr2, Tr6).

6. Moteur selon l'une des revendications 4 et 5, caractérisé en ce que l'élément de faible impédance (Tr2, Tr6) et l'élément d'impédance élevée (12, 13) sont respectivement un élément de faible résistance ohmique et un élément de résistance ohmique élevée.

# FIG. 1 PRIOR ART

TO PULSE COMBINING CIRCUIT

TO PULSE COMBINING CIRCUIT

0 182 490

# FIG. 2

# FIG. 3 PRIOR ART

GATE VOLTAGE OF Tr1 (Tr1 G)
GATE VOLTAGE OF Tr2 (Tr2 G)
GATE VOLTAGE OF Tr3 (Tr3 G)
VOLTAGE OF POINT 4
VOLTAGE OF Tr5 (Tr5 G)
VOLTAGE OF Tr6 (Tr6 G)
VOLTAGE OF Tr7 (Tr7 G)
VOLTAGE OF POINT 8

T1  T2  T1  T2

0 182 490

# F I G. 4A

GATE VOLTAGE OF $Tr_2$, $Tr_6$

GATE VOLTAGE OF $Tr_3$, $Tr_7$

VOLTAGE(VRS) OF POINTS 4, 8

# F I G. 4B

GATE VOLTAGE OF $Tr_2$, $Tr_6$

GATE VOLTAGE OF $Tr_3$, $Tr_7$

VOLTAGE(VRS) OF POINTS 4, 8

$T_3$

# F I G. 4C

GATE VOLTAGE OF $Tr_2$, $Tr_6$

GATE VOLTAGE OF $Tr_3$, $Tr_7$

VOLTAGE(VRS) OF POINTS 4, 8

# F I G. 4D

GATE VOLTAGE OF $Tr_2$, $Tr_6$

GATE VOLTAGE OF $Tr_3$, $Tr_7$

VOLTAGE(VRS) OF POINTS 4, 8

4

# FIG.5

GATE VOLTAGE OF Tr₁
(Tr₁ G)

GATE VOLTAGE OF Tr₂
(Tr₂ G)

GATE VOLTAGE OF Tr₃
(Tr₃ G)

VOLTAGE OF POINT 4

VOLTAGE OF Tr₅
(Tr₅ G)

VOLTAGE OF Tr₆
(Tr₆ G)

VOLTAGE OF Tr₇
(Tr₇ G)

VOLTAGE OF POINT 8

T1    T2    T1    T2

0 182 490

# F I G.6A

# F I G.6B

# FIG. 7

```
                                                          VTr1G
                                                          VTr2G
                                                          VTr5G
┌────────────┐   ┌──────────┐   ┌──────────────────┐     VTr6G    ┌──────────────┐
│ OSCILLATOR │──▶│ DIVIDER  │──▶│ PULSE COMBINING   │────────────▶│   DRIVING    │
└────────────┘   └──────────┘   │    CIRCUIT        │             │   CIRCUIT    │
                                └──────────────────┘             └──────────────┘
                                  VTr2G       ▲                          │
                                  VTr6G       │ VRS                      │
                                  VTr3G       │                          ▼
                                  VTr7G│                          ┌──────────────┐
                                       ▼                          │     STEP     │
                                ┌──────────────────┐              │    MOTER     │
                                │   DETECTING      │              └──────────────┘
                                │    CIRCUIT       │
                                └──────────────────┘
```

0 182 490